# EUROPEAN PATENT APPLICATION

(11) **EP 1 702 950 A2**
(43) Date of publication of application: **20.09.2006**
(21) Application number: 05028478.5
(22) Date of filing: 27.12.2005
(51) Int. Cl.: C08L 3/02, C08L 101/00, C08L 67/00

(54) **Biodegradable plastic composition and producing method thereof**

(30) Priority: 15.03.2005 US 80281
(71) Applicant: Chen, Ming-Tung, Taipei City 105 (TW)
(72) Inventor: Chen, Ming-Tung, Taipei City 105 (TW)
(74) Representative: Sawodny, Michael-Wolfgang

(57) **Abstract**

A biodegradable plastic composition is provided. The biodegradable plastic composition includes a starch in a range from about 10% to about 80% by weight of the composition, a synthetic biodegradable resin in a range from about 10% to about 80% by weight of the composition, an elastomer in a range from about 1% to about 10% by weight of the composition, an affinity agent in a range from about 5% to about 40% by weight of the composition, and an additives in a range from about 1% to about 15% by weight of the composition. Further, a producing method of the biodegradable plastic also is provided.

## Description

The present invention is related to a biodegradable plastic composition and a producing method thereof, and more particularly to a biodegradable plastic composition which is degraded completely under a compost condition and a producing method thereof.

In Taiwan, more than three billion plastic bags and more than eight thousand metric tons of agricultural mulch films are used every year, and the subsequent waste disposal process therefor would be a thomy problem. The waste disposal process usually includes the landfill, the incineration or the recycling. These plastic products are hardly degraded due to their persistent property while these plastic products are directly filled in the landfill. If these plastic products are incinerated in the incinerator, the toxic exhaust fumes including "Dioxin" would be generated therewith. Further, these plastic products are often greasy and dirty, and hence they are unable to be recycled. Besides, the plastic products include various materials and fail to be respectively marked or classified so that the recycle for the plastic products is not easy to be brought out. Furthermore, unlike the glass material or the metal material which allows the recycled products to have a similar property thereof, the physical property and the mechanical property of the recycled plastic products would be decreased gradually under every recycling treatment, and it often wastes much energy in the recycling treatment.

In fact, the plastic industry has been developed in the 70's age and many people have awoken to value of the treatment for waste plastics products. Further, scientists considered it was very possible to research some techniques to catalyze or reduce plastic materials at that time. Nevertheless, it was proved that whatever a catalyzer, a photosensitizer, a disintegrated agent or a reductant, was failed to treat these waste plastics products effectively.

Therefore, a new research aspect has been developed to study a new "material" from later of the 70's age. The new "material" is used to substitute for petrochemical materials, i.e. plastic products, and to decrease the environmental pollution resulted from the petrochemical materials. Therefore, people in the academic or the industrial fields have invested a lot of time to develop the biodegradable materials.

The new material is called as a biodegradable "green plastic", which is derived from plants and manufactured by the biochemical refinement, fermentation or synthesis. Moreover, the physical property and the mechanical property of the biodegradable green plastic are similar to those of traditional plastic products so that the biodegradable green plastic could be used to substitute for the traditional plastic products.

The biodegradable materials would be very stable when being manufactured and used, but could be degraded and transformed into biomass energy, carbon dioxide and water within a proper time after wasting. The biomass energy is existed generally in the natural and benefits the environment because the ability for the carbon fixation in the formation process of the biomass energy is more than that of the incinerating process. The biomass energy of the biodegradable materials would be absorbed or used by plants, so that the biodegradable materials could be treated by composting and be recycled in the natural.

Nowadays, International Standards Organization (ISO) includes the following three standards for identifying the biodegradable materials; ISO 14851, ISO 14852 and ISO 14855, in which the ISO 14855 is so-called the China National Standard 14432 (CNS 14432) and it is the most exact one among these standards. Further, the ISO 14855 relates to a method for determination of the ultimate aerobic biodegradability and disintegration of plastic materials under the controlled composting conditions, i,e. Method by analysis of evolved carbon dioxide, which regulates that the release of the carbon dioxide should be measured under 20-25± 1°C and the biodegradability calculated therefrom should be ≧ 90%.

Recently, the biodegradable plastic blended with starch and synthetic resin has been a most dominant type for the biodegradable plastic materials because of its lower price and better processing property. In addition, the synthetic resin is one of polyethylene (PE), polypropylene (PP), polystyrene (PS), and polyvinyl chloride (PVC) which is a common synthetic material with a hard degraded property. Nevertheless, many patents, researches, or documents concerning the infiltration capacity or denaturation for starch, the processing technique or the formula for the blended biodegradable plastic, and the resin modifying have been publicized. However, the fundamental property of the synthetic resin still is not changed in the blending process of the biodegradable plastic, so that the residual synthetic polymer, i.e. the synthetic resin of PE, PP; PS or PVC, of the biodegradable plastic still fails to be degraded even through starch contained therein been degraded completely. Therefore, this biodegradable plastic with the synthetic resin does not comply with the above-mentioned standards for the biodegradable materials and is not a real environmental product.

Presently, various manufacturing techniques for the biodegradable materials have been disclosed, such as a manufacturing process for producing a biodegradable copolymer with two random duplicate monomers and a manufacturing process for producing a biodegradable composition blended with a ethylene/vinyl alcohol copolymer and a destructurized starch. The biodegradable copolymer and the biodegradable composition exhibit a complete biodegradability and a better mechanical property, but the manufacturing process therefor has steps involving more complex chemical synthesis which are difficult and complex.

Therefore, a purpose of the present invention is to develop a new composition and producing process therefor to deal with the above situations encountered in the prior art.

It is therefore a first aspect of the present invention to provide a biodegradable plastic composition and a producing method thereof including a simpler chemical composition and an easier manufacturing procedure with lower cost to produce a complete biodegradable product for complying with international environmental standards.

It is therefore a second aspect of the present invention to provide a biodegradable plastic composition and a producing method thereof, in which its product is granular and easy to integrate into the general plastic manufacturing process and thereby decreasing producing cost and enhancing producing efficiency.

According to the aspect of the present invention, a biodegradable plastic composition is provided. The biodegradable plastic composition includes a starch, a synthetic biodegradable resin, a synthetic elastomer, an affinity agent, and an accelerating agent. The starch is in a range from about 10% to about 80% by weight of the composition, the synthetic biodegradable resin is in a range from about 10% to about 80% by weight of the composition, the elastomer in a range from about 1% to about 10% by weight of the composition, the affinity agent in a range from about 5% to about 40% by weight of the composition, and the additives in a range from about 1% to about 15% by weight of the composition.

Preferably, the starch is in a range from 10% to 80% by weight of the composition.

Preferably, the synthetic biodegradable resin is a synthetic biodegradable polymer with one of an ester side chain and a side chain being one selected from a group consisting of an ester group, a hydroxyl group, a carboxyl group and a ketone group.

Preferably, the synthetic biodegradable polymer is one selected from a group consisting of polycaprolactone (PCL), polylactic acid (PLA), polybutyl succinate (PBS) and a mixture thereof, and is in a range from 10% to 80% by weight of the composition.

Preferably, the elastomer is an elastic copolymer with at least one side chain being one selected from a group consisting of a hydroxyl group, a carboxyl group and an ester group.

Preferably, the elastomer can be a copolymerized mixture being one selected from copolymers with at least one side chain being one selected from a group consisting of a hydroxyl group, a carboxyl group, an either group and an ester group, and a mixture thereof.

Preferably, the affinity agent is glycerol and polyvinyl alcohol (PVA).

Preferably, the additives are selected from a group consisting of calcium carbonate, calcium stearate, sec-butyl alcohol, ethyl acetate, sorbitol, other additives used in plastics or foods and mixtures thereof.

According to another aspect of the present invention, a method for producing a biodegradable plastic is provided. The method includes steps of (a) providing a composition having a starch, a synthetic biodegradable resin, an elastomer, an affinity agent and an additives, wherein the starch is in a range from about 10% to about 80% by weight of the composition, the synthetic biodegradable resin is in a range from about 10% to about 80% by weight of the composition, the elastomer is in a range from about 1% to about 10% by weight of the composition, the affinity agent is in a range from about 5% to about 40% by weight of the composition, and the additives is in a range from about 1% to about 15% by weight of the composition, (b) performing an agitating process, (c) performing a compounding process, and (d) cooling and granulating to form the biodegradable plastic.

Preferably, the agitating process in the step (b) is performed under an agitating rate ranged between 100 and 3000 rpm, an agitating time ranged between 3 and 10 min and an agitating temperature ranged between 30 and 120°C .

Preferably, the agitating rate is preferably between 100 and 2000 rpm and the agitating time is preferably between 3 and 5 min

Preferably, the agitating process is performed by a closed high-speed agitator and the compounding process is performed by a twin-screw extruder.

Preferably, the compounding process in the step (c) is performed under a compounding temperature ranged between 120 and 220°C and preferably between 150 and 220°C, and a compounding time ranged between 1 and 12 min and preferably between 1 and 10 min.

Preferably, more than 90% of the biodegradable plastic composition is degraded within 6 months under a compost condition, and then the biodegradable plastic composition is degraded completely within 1 year.

The above contents and advantages of the present invention will become more readily apparent to those ordinarily skilled in the art after reviewing the following detailed descriptions, in which:
The present invention will now be described more specifically with reference to the following embodiment. It is to be noted that the following descriptions of preferred embodiment of this invention are presented herein for purpose of illustration and description only; it is not intended to be exhaustive or to be limited to the precise form disclosed.
The accomplished method for producing a biodegradable plastic composition provided in the present invention includes starting steps of a starch in a range from 10% to 80% by weight of the composition. Subsequently, the starch would be mixed with a synthetic biodegradable resin in a range from 10% to 80% by weight of the composition, an elastomer in a range from 1% to 10% by weight of the composition, an affinity agent in a range from 5% to 40% by weight of the composition, and an additives in a range from 1% to 15% by weight of the composition so as to form a mixed precursor. Further, the mixed precursor is agitated with a high speed in a closed agitator under an agitating time ranged between 3 and 10 min, an agitating rate ranged between 100 and 3000 rpm, and an agitating temperature ranged between 30 and 120°C, and then is conveyed into a twin-screw extruder to be compounded therein under a compounding temperature ranged between 120 and 200°C, and a compounding time ranged between 1 and 12 min so as to provide a compounded product. Therefore, under the compounding effect of a high temperature, a high pressure or a high shear force, the compounded product would be completely mixed and the partial side-chain groups thereof would be polymerized. Moreover, the final process is a step of cooling and granulating, and white granular products, i.e. the biodegradable plastic are produced thereby. Accordingly, it is very simple and fast for this producing process to be accomplished. Besides, the granular products could be introduced into a general plastic manufacturing process to produce various biodegradable plastic products.

Furthermore, the synthetic biodegradable resin is a synthetic biodegradable polymer with one of an ester side chain and a side chain being one selected from a group consisting of an ester group, a hydroxyl group (OH), a carboxyl group and a ketone group, such as polycaprolactone (PCL), polylactic acid (PLA), polybutyl succinate (PBS) or mixtures thereof. The elastomer with at least one side chain being one selected from a group consisting of a hydroxyl group, a carboxyl group and an ester group, such as thermoplastic elastomer-either ester (TP-EE). Moreover, the affinity agent is glycerol or PVA, and additives. Besides, the above-mentioned chemical elements or composing formula would be adjusted properly so as to be introduced into various plastic manufacturing processes, such as film blowing, injection molding and forming, or produce various product properties, such as strength, elasticity and hardness.

### A. The First Experiment Example:

The starch in weight of 30 kg is mixed with polylactic acid (PLA) in weight of 30 kg, polybutyl succinate (PBS) in weight of 17 kg, TP-EE in weight of 5 kg, glycerol in weight of 10 kg, PVA 5 kg, and an additives in weight of 3 kg. The above-mentioned mixing materials are agitated in a high-speed agitator under an agitating temperature of 80°C an agitating time of 5 min and an agitating rate of 1000 rpm to generate a uniform white mixture.

The white mixture is conveyed into a twin-screw extruder through a hopper and is compounded therein under a compounding temperature ranged between 120 and 200°C, and a compounding time of 1 min to produce a compounded product. The compounded product squeezed from the twin-screw extruder is cooled and granulated to form a white granular product, i.e. the biodegradable plastic, with a particle size about 2 mm. More than 90% of the granular product is degraded within 6 months under a compost condition, and then the organic carbon of the product is degraded almost completely within 1 year.

### B. The Second Experiment Example:

The starch in weight of 35 kg is mixed with polycaprolactone (PCL) in weight of 39 kg, TP-EE in weight of 4 kg, glycerol in weight of 10 kg, PVA in weight of 7 kg, and additives in weight of 5 kg. The above-mentioned mixing materials are agitated in a high-speed agitator under an agitating temperature of 80 °C, an agitating time of 3 min and an agitating rate of 700 rpm to generate a uniform white mixture.

The white mixture is conveyed into a twin-screw extruder through a hopper and is compounded therein under a compounding temperature ranged between 120 and 185°C, and a compounding time of 1 min to produce a compounded product. The compounded product squeezed from the twin-screw extruder is cooled and granulated to form a white granular product, i.e. the biodegradable plastic, with a particle size about 2mm. More than 90% of the granular product is degraded within 6 months under a compost condition, and then the organic carbon of the product is degraded almost completely within 1 year.

### C. The Third Experiment Example:

The starch in weight of 45 kg is mixed with polybutyl succinate (PBS) in weight of 30 kg, TP-EE in weight of 5 kg, glycerol in weight of 10 kg, PVA in weight of 6 kg, and additives in weight of 4 kg. The above-mentioned mixing materials are agitated in a high-speed agitator under an agitating temperature of 80 °C, an agitating time of 5 min and an agitating rate of 800 rpm to generate a uniform white mixture.

The white mixture is conveyed into a twin-screw extruder through a hopper and is compounded therein under a compounding temperature ranged between 120 and 200°C, and a compounding time of 1 min to produce a compounded product. The compounded product squeezed from the twin-screw extruder is cooled and granulated to form a white granular product, i.e. the biodegradable plastic, with a particle size about 2mm. More than 90% of the granular product is degraded within 6 months under a compost condition, and then the organic carbon of the product is degraded almost completely within 1 year.

Therefore, according to the above descriptions, the present invention has disclosed is mixing with degradable materials in the natural, i.e. starch and degradable polymers, to produce a biodegradable material which has better characteristics than the traditional plastics. The produced biodegradable material could comply with the international environmental standards and the waste management trend for recycling, pollution reduction, and resource conservation, and would be applied for manufacturing various kinds of green products.

In conclusion, it is understood that biodegradable plastic composition and a producing method thereof could provide a complete biodegradable plastic without synthetic resins of PE, PP, PS or PVC according to steps of selecting proper polymers and copolymers from existing synthetic biodegradable materials, mixing with proper ratio of modified starch, affinity agent and other additives, and performing a compounding process with a high temperature and a high pressure. The producing process of the present composition is very simple and easy to be performed so that the cost thereof would be decreased and the producing efficiency thereof would be enhanced. Further, a better reprocessing property and a better biodegradability in the present biodegradable plastic would be achieved

## Claims

1. A biodegradable plastic composition, **characterized in that**:
a starch in a range from about 10% to about 80% by weight of the composition;
a synthetic biodegradable resin in a range from about 10% to about 80% by weight of the composition;
an elastomer in a range from about 1% to about 10% by weight of the composition;
an affinity agent in a range from about 5% to about 40% by weight of the composition;
an additives in a range from about 1% to about 15% by weight of the composition.

2. The composition according to claim 1, **characterized in that** the starch is in a range from 10% to 80% by weight of the composition.

3. The composition according to claim 1, **characterized in that** the synthetic biodegradable resin is a synthetic biodegradable polymer with one of an ester side chain and a side chain being one selected from a group consisting of an ester group, a hydroxyl group, a carboxyl group and a ketone group.

4. The composition according to claim 3, **characterized in that** the synthetic biodegradable polymer is one selected from a group consisting of polycaprolactone (PCL), polylactic acid (PLA), polybutyl succinate (PBS) and a mixture thereof.

5. The composition according to claim 3, **characterized in that** the synthetic biodegradable polymer is in a range from 10% to 80% by weight of the composition.

6. The composition according to claim 1, **characterized in that** the elastomer is an elastomer copolymer being one selected from copolymers with at least one side chain being one selected from a group consisting of a hydroxyl group, a carboxyl group, an either group and an ester group, and a mixture thereof.

7. The composition according to claim 1, **characterized in that** the affinity agent is one of glycerol and polyvinyl alcohol (PVA).

8. The composition according to claim 1, **characterized in that** the additives is one selected from a group consisting of calcium carbonate, calcium stearate, sec-butyl alcohol, ethyl acetate, silicate, sorbitol, other additives used in plastics or foods and mixtures thereof.

9. A method for producing a biodegradable plastic, **characterized by** comprising steps of:
(a) providing a composition having a starch, a synthetic biodegradable resin, an elastomer, an affinity agent, and an additives, wherein the starch is in a range from about 10% to about 80% by weight of the composition, the synthetic biodegradable resin is in a range from about 10% to about 80% by weight of the composition, the elastomer is in a range from about 1% to about 10% by weight of the composition, the affinity agent is in a range from about 5% to about 40% by weight of the composition, and the additives is in a range from about 1% to about 15% by weight of the composition;
(b) performing an agitating process;
(c) performing a compounding process; and
(d) cooling and granulating to form the biodegradable plastic.

10. The method according to claim 9, **characterized in that** the agitating process in the step (b) is performed under an agitating rate ranged between 100 and 3000 rpm, an agitating time ranged between 1 and 10 min and an agitating temperature ranged between 30 and 120°C.

11. The method according to claim 10, **characterized in that** the agitating rate is preferably between 200 and 2000 rpm and the agitating time is preferably between 3 and 5 min.

12. The method according to claim 9, **characterized in that** the compounding process in the step (c) is performed under a compounding temperature ranged between 120 and 220°C, and a compounding time ranged between 1 and 10 min.

13. The method according to claim 12, **characterized in that** the compounding temperature is preferably between 150 and 220°C, and the compounding time is between 1 and 10 min.

14. The method according to claim 9, **characterized in that** the compounding process is performed by a twin-screw extruder.

15. The method according to claim 9, **characterized in that** more than 90% of the biodegradable plastic is degraded within 6 months under a compost condition, and then the biodegradable plastic composition is degraded completely within 1 year.
